# EUROPEAN PATENT APPLICATION

(11) **EP 4 391 165 A1**
(43) Date of publication of application: **26.06.2024**
(21) Application number: 22306936.0
(22) Date of filing: 19.12.2022
(51) Int. Cl.: H01M 50/171, H01M 50/186, H01M 50/195

(54) **COMPOSITION COMPRISING A MOISTURE-CROSSLINKABLE POLYMER**

(71) Applicant: Bostik SA, 92700 Colombes (FR)
(72) Inventor: CAO, Yichen, SHANGHAI, 201108 (CN)
(74) Representative: Arkema Patent

(57) **Abstract**

The invention relates to a composition comprising:
- a moisture-crosslinkable polymer,
- at least 1 % by weight of unexpanded heat-expandable organic particles, and
- at least 20 % by weight of an inorganic filler,
the weight percentages being with respect to the total weight of the composition.

The invention also relates to a method for bonding substrates implementing the composition according to the invention.

Furthermore, the invention relates to an article comprising the composition according to the invention.

The invention further relates to a method for separating substrates implementing the composition according to the invention and comprising a heating step.

Finally, the invention relates to the uses of the composition according to the invention.

## Description

### TECHNICAL FIELD

The present invention relates to a composition comprising a moisture-crosslinkable polymer and its uses, a method for bonding substrates, an article and a method for separating substrates.

### TECHNICAL BACKGROUND

A battery housing, especially for automobiles, generally comprises a lid and a container sealed together, with battery modules or cells inside the battery housing.

There are several ways to seal a battery lid and a battery container of a battery housing.

Traditionally, one way is to use a "gasket", which is a shaped rubber piece generally made of EPDM rubber (ethylene propylene diene monomer rubber) or silicone rubber or polyurethane rubber. The gasket is placed between the lid and the container, and sealing is achieved by interval bolts or riveting. To a certain degree, the tightened bolts or riveting secure the sealing effect of such structure to be air- or water-proof by compressing the gasket. The gasket is then in contact with both the lid and the container, but there is no chemically adhesion or bonding between them.

A similar typical way is to use a "form-in-place gasket" for sealing. Difference with the above described traditional gasket is that a kind of glue is applied onto either the lid or the container and it forms a kind of foamed or non-foamed sealing gasket well adhered to the part to which it was applied. However, there is still no chemical adhesion or bonding to the other part.

Using a gasket to seal has the advantage of making it possible to very easily open the lid after dismantling the bolts. However, such gasket cannot provide superior sealing to the battery housing, especially when the dimension tolerance of the lid or container is large (in particular when it is made of non-metal composite materials like Sheet Moulding Composite), or when severe working conditions or aging requirements are used or tested. There is still a possibility of leakage from time to time when using a gasket.

Another typical way is the "bonding" method: between the lid and container, a sealant is used to replace the gasket. The sealant is applied in uncured state onto either the lid or the container and then both parts are contacted during the open time of the sealant. After curing, the sealant is solid and completely adheres to both the lid and container, chemically bonded. Such bonding method provides very good sealing properties to achieve superior water-/air- resistance and, due to chemical bonding between the lid and container, the bonding strength is also good even under or after certain long term aging or vibration conditions. In order to enhance the sealing effect, bolts or other kinds of riveting can also be used.

The disadvantage of this bonding method is that it is difficult to disassemble the lid and the container, even by mechanical cutting or drilling, due to the elastic chemical nature of sealants (in particular, the friction force between the knife blade and the elastic sealant and the heat generated during cutting increase inconvenience of opening). Furthermore, as these sealants also have good bonding strength to support severe aging conditions, disassembly of the lid and the container easily cause deformation or break of one or both of them.

Therefore, it is not possible to easily disassemble the battery for maintenance or repair operations, even less manually.

Thus, there is a need for a new solution which would make it possible to provide an article, in particular a battery housing, being efficiently sealed and which can be easily disassembled when necessary (for example, for repair or maintenance operations), in particular manually.

### SUMMARY OF THE INVENTION

The invention relates to a composition comprising:
- a moisture-crosslinkable polymer,
- at least 1 % by weight of unexpanded heat-expandable organic particles, and
- at least 20 % by weight of an inorganic filler,
the weight percentages being with respect to the total weight of the composition.

The invention also relates to a method for bonding substrates comprising the steps of:
- coating, on at least one surface of the substrates, of the composition according to the invention, then
- contacting the substrates.

Furthermore, the invention relates to an article comprising the composition according to the invention, said composition bonding at least two substrates of said article.

The invention further relates to a method for separating substrates implementing the composition according to the invention and comprising a heating step.

Finally, the invention relates to the use of the composition according to the invention as an adhesive or a sealant, or to manufacture an article comprising heat-separable substrates.

The present invention makes it possible to address the need mentioned above. In particular, the composition according to the invention surprisingly makes it possible to provide an efficient sealing structure (in particular a battery housing, wherein the composition is applied between the lid and the container), which can be easily disassembled when necessary.

### DESCRIPTION OF THE INVENTION

### Composition according to the invention

The invention relates to a composition comprising:
- a moisture-crosslinkable polymer,
- at least 1 % by weight of unexpanded heat-expandable organic particles, and
- at least 20 % by weight of an inorganic filler,
the weight percentages being with respect to the total weight of the composition.

### Moisture-crosslinkable polymer

The composition according to the invention comprises a moisture-crosslinkable polymer.

In the presence of water (e.g. moisture from the air), the individual polymer molecules can crosslink with each other (a polymer molecule can bond with another polymer molecule) to form a crosslinked polymeric network.

The moisture-crosslinkable polymer may be selected from polyurethanes having -NCO end groups, silylated polymers and mixtures thereof, preferably from silylated polymers and mixtures thereof.

The polyurethanes having -NCO end groups may be prepared, in a well-known way, by reacting:
- a polyisocyanate compound, with
- at least one polyol.

The polyisocyanate compound may be selected from isophorone diisocyanate (IPDI), diphenylmethane diisocyanate (MDI), dicyclohexylmethane 4,4'-diisocyanate (H12MDI), toluene diisocyanate (TDI), 1,4-cyclohexylene diisocyanate, 1,2-cyclohexylene diisocyanate, 2,4-diisocyanato-1-methylcyclohexane, 1,3-diisocyanato-2-methylcyclohexane, meta-xylylene diisocyanate (m-XDI), hydrogenated meta-xylylene diisocyanate (m-H6XDI), tetramethylxylene diisocyanate (TMXDI), 1,2-ethylene diisocyanate, 1,3-propylene diisocyanate, 1,4-butylene diisocyanate, 1,5-pentamethylene diisocyanate (PDI), 1,6-hexamethylene diisocyanate (HDI) and mixtures thereof, preferably from IPDI, MDI, TDI, m-XDI, HDI and mixtures thereof.

The polyol, preferably a diol, may be selected from polyether polyols, polyester polyols, polycarbonate polyols, polyacrylate polyols, polysiloxane polyols, polyolefin polyols and mixtures thereof, preferably from polyether polyols.

In the presence of moisture, some -NCO groups of the polyurethane molecules are converted into carbamic acid groups (-NH-C(O)OH) which are unstable and lead to amine groups and carbon dioxide (-NH₂ + CO₂). The amine groups formed react quickly with -NCO groups (not already converted) forming urea linkages (-NH-C(O)NH-): crosslinking occurs and leads to a polymeric network.

By "silylated polymer", it is intended a polymer comprising at least one alkoxysilyl group, preferably at least two alkoxysilyl end groups.

The silylated polymer is generally a more or less viscous liquid. The silylated polymer may have a viscosity at 23°C ranging from 0.5 to 150 Pa.s, preferably from 5 to 100 Pa.s, more preferably from 5 to 50 Pa.s.

The viscosity of the silylated polymer can for example be measured according to a Brookfield method at 23°C and 50% relative humidity.

The silylated polymer preferably comprises at least two alkoxysilyl end groups of formula (I):

-Si(R⁴)ₚ(OR⁵)₃₋ₚ

wherein:
- R⁴ represents a linear or branched alkyl radical comprising from 1 to 4 carbon atoms, and when p equal to 2 the R⁴ radicals are identical or different;
- R⁵ represents a linear or branched alkyl radical comprising from 1 to 4 carbon atoms, and when p equal to 0 or 1 the R⁵ radicals are identical or different, with the possibility that two OR⁵ groups may be engaged in the same ring;
- p is an integer equal to 0, 1 or 2.

The various groups, radicals and letters which are included in the formulae described in the present application retain throughout the present text the same definition, unless otherwise stated.

Preferably, the alkoxysilyl end groups are of formula (I) wherein:
- R⁴ represents an alkyl radical comprising 1 or 2 carbon atoms, preferably 1 carbon atom;
- R⁵ represents an alkyl radical comprising from 1 or 2 carbon atoms, preferably 1 carbon atom;
- p is an integer equal to 0 or 1.

Advantageously, the silylated polymer is of formula (II), (III) or (IV): 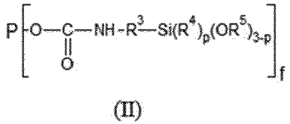 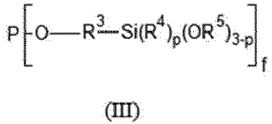 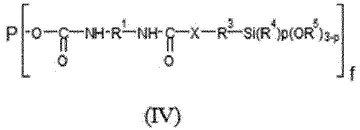 wherein:
- R⁴, R⁵ and p have the same meaning as in formula (I) described above,
- P represents a saturated or unsaturated polymeric radical, with a linear or branched open chain, or comprising one or more rings being optionally aromatic, optionally comprising one or more heteroatoms such as oxygen, nitrogen, sulfur and/or silicon, preferably oxygen and/or nitrogen,
- R¹ represents a divalent hydrocarbon radical comprising from 5 to 15 carbon atoms, saturated or unsaturated, being a linear or branched open chain, or comprising one or more rings being optionally aromatic,
- R³ represents a divalent linear or branched alkylene radical comprising from 1 to 6 carbon atoms, preferably from 1 to 3 carbon atoms,
- X represents a divalent radical chosen from -NH-, -NR⁷- or -S-,
- R⁷ represents a linear or branched alkyl radical comprising from 1 to 20 carbon atoms and optionally comprising one or more heteroatoms,
- f is an integer ranging from 1 to 6, preferably from 2 to 4, more preferably equal to 2 or 3.

Advantageously, the silylated polymer is of formula (II), (III) or (IV), preferably of formula (III), wherein P represents a polymer radical selected from polyethers, polycarbonates, polyesters, polyolefins, polyacrylates, polyurethanes, polysiloxanes, polyether polyurethanes, polyester polyurethanes, polyolefin polyurethanes, polyacrylate polyurethanes, polycarbonate polyurethanes and polyether/polyester polyurethane blocks, preferably from polyethers, polyurethanes and polyether polyurethanes, more preferably from polyethers.

According to an embodiment, the silylated polymer is of formula (II'), (II"), (III') or (IV'): 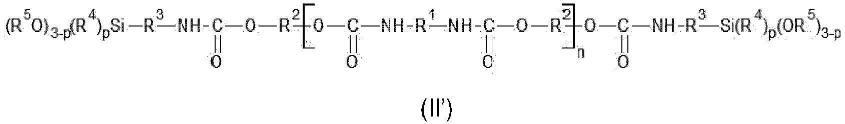 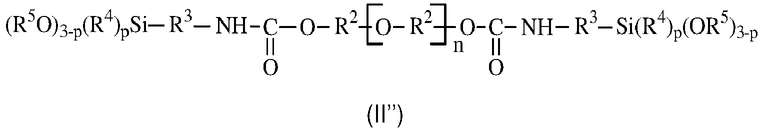 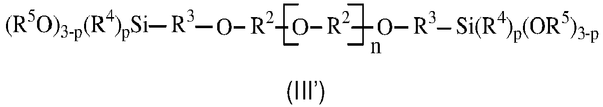 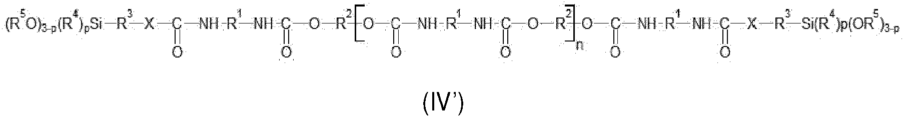 wherein:
- R¹, R³, R⁴, R⁵, X, R⁷ and p have the same meaning as in formulas (II), (III) and (IV),
- R² represents a saturated or unsaturated, linear or branched, divalent hydrocarbon radical optionally comprising one or more heteroatoms such as oxygen, nitrogen, sulfur, silicon,
- n is an integer, preferably n is such that the number average molecular weight of the silylated polymer vary from 1000 g/mol to 70000 g/mol, preferably from 5000 g/mol to 50000 g/mol, more preferably from 10000 g/mol to 40000 g/mol.

In the silylated polymers of formulas (II'), (II"), (III') or (IV') described above, when the radical R² comprises one or more heteroatoms, said heteroatoms are not present at the end of the chain. In other words, the free valencies of the divalent radical R² linked to the neighboring oxygen atoms of the silylated polymer each come from a carbon atom. Therefore, the main chain of the R² radical is terminated by a carbon atom at each of the two ends, said carbon atom thus having a free valence.

When the silylated polymer is of formula (II') or (IV'), the radical R² may be selected from the following divalent radicals, the formulas showing the two free valencies:
- derived from a polypropylene glycol: 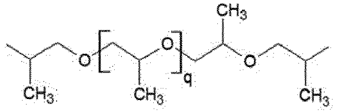
- derived from a polyester diol: 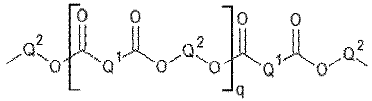
- derived from a polybutadiene diol: 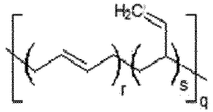
- derived from a polyacrylate diol: 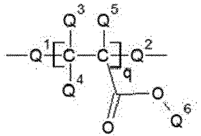
- derived from a polysiloxane diol: 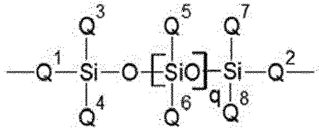 wherein:
   - q represents an integer, advantageously such that the number average molecular weight of the radical R² ranges from 200 g/mol to 48600 g/mol, preferably from 500 g/mol to 18600 g/mol, more preferably from 1000 g/mol to 12600 g/mol,
   - r and s represent zero or an integer, advantageously such that the number average molecular weight of the radical R² ranges from 200 g/mol to 48600 g/mol, preferably from 500 g/mol to 18600 g/mol, more preferably from 1000 g/mol to 12600 g/mol, provided that the sum r+s is different from zero,
   - Q¹ represents a linear or branched, saturated or unsaturated, divalent aromatic or aliphatic alkylene radical, preferably having from 1 to 18 carbon atoms, more preferably from 1 to 8 carbon atoms,
   - Q² represents a linear or branched divalent alkylene radical preferably having from 2 to 36 carbon atoms, more preferably from 1 to 8 carbon atoms,
   - Q³, Q⁴, Q⁵, Q⁶, Q⁷ and Q⁸ represent, independently of each other, a hydrogen atom or an alkyl, alkenyl or aromatic radical, preferably having 1 to 12 carbon atoms, preferably 2 to 12 carbon atoms, more preferably from 2 to 8 carbon atoms.

According to an embodiment, R¹ is selected from the following divalent radicals, the formulas showing the two free valencies:
a) the divalent radical derived from isophorone diisocyanate (IPDI): 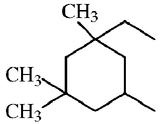
b) the divalent radical derived from dicyclohexylmethane diisocyanate (H12MDI): 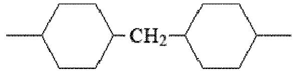
c) the divalent radicals derived from the 2,4- and 2,6- isomers of toluene diisocyanate (TDI): 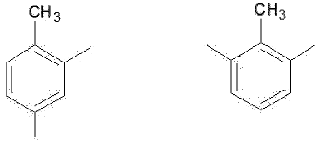
d) the divalent radicals derived from the 4,4' and 2,4'- isomers of diphenylmethane diisocyanate (MDI): 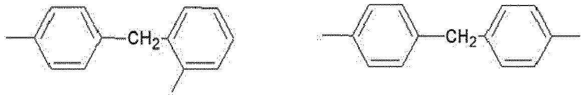
e) the divalent radical derived from hexamethylene diisocyanate (HDI): -(CH₂)₆-
f) the divalent radical derived from m-xylylene diisocyanate (m-XDI):

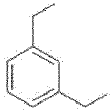

According to a preferred embodiment, the silylated polymer is of formula (II") or (III'), preferably (III'), and the radical R² preferably represents a linear or branched divalent alkylene radical comprising from 2 to 4 carbon atoms, more preferably a divalent linear or branched alkylene radical comprising 3 carbon atoms, even more preferably an iso-propylene radical (of formula -CH₂-CH(CH₃)-).

According to a particularly preferred embodiment, the silylated polymer is a polymer of formula (III') wherein:
- R² represents an iso-propylene radical,
- R⁵ represents a methyl radical, and
- p is equal to 0.

In the presence of moisture, the alkoxysilyl groups of the polymers are converted into silanol groups, which subsequently undergo reaction with other silanol groups to form covalent siloxane bonds between individual polymer molecules, which ensure the creation of a crosslinked polymeric network.

The number average molecular weight of the moisture-crosslinkable polymer may vary from 1000 g/mol to 70000 g/mol, preferably from 5000 g/mol to 50000 g/mol, more preferably from 10000 g/mol to 40000 g/mol.

The number average molecular weight of a polymer can be measured by size exclusion chromatography (or SEC), which is also denoted by the term "gel permeation chromatography" (or GPC), preferably with a polystyrene calibration.

The moisture-crosslinkable polymer content in the composition according to the invention may vary from 10 % to 60 % by weight with respect to the total weight of the composition, preferably from 20 % to 55 % by weight, more preferably from 30 % to 50 % by weight.

In the context of the invention, the ranges of values are understood to be inclusive. For example, the range "between 10 % and 60 %" includes, in particular, the values 10 % and 60 %.

### Unexpanded heat-expandable organic particles

The composition according to the invention comprises at least 1 % by weight of unexpanded heat-expandable organic particles, with respect to the total weight of the composition.

By "unexpanded heat-expandable organic particles", it is intended organic particles, preferably microspheres, which can expand when heated, but which are introduced unexpanded in the composition according to the invention. Said particles are organic because they comprise mostly organic compounds, i.e. compounds comprising carbon and hydrogen atoms. In particular, said particles comprise less than 21 % by weight of inorganic compounds, with respect to the total weight of the particles, preferably less than 11 % by weight.

Advantageously, the unexpanded heat-expandable organic particles comprise a thermoplastic polymer shell and a propellant entrapped therein. Such particles are commercially available, for example under the trademark EXPANCEL^{®}.

The propellant may be a liquid having a boiling temperature at most equal to the softening temperature of the thermoplastic polymer shell. Upon heating, the propellant evaporates and increases the internal pressure while the shell softens, resulting in an expansion of the particles.

The propellant may comprise hydrocarbons (optionally chlorinated or fluorinated) such as n-pentane, isopentane, neopentane, n-butane, isobutane, n-hexane, isohexane, neohexane, n-heptane, isoheptane, n-octane, isooctane, petroleum ether, methyl chloride, dichloromethane, dichloroethane, dichloroethylene, trichloroethane, trichloroethylene, trichlorofluoromethane or mixtures thereof.

Advantageously, the propellant constitutes from 5 % to 40 % by weight of the total weight of the particles.

Advantageously, the thermoplastic polymer shell is a polymer (homopolymer or copolymer) of at least one ethylenically unsaturated monomer, for example selected from nitrile containing monomers (such as acrylonitrile, methacrylonitrile, α-chloroacrylonitrile, α-ethoxyacrylonitrile, fumaronitrile or crotonitrile), acrylic esters (such as methyl acrylate or ethyl acrylate), methacrylic esters (such as methyl methacrylate, isobornyl methacrylate or ethyl methacrylate) vinyl halides (such as vinyl chloride), vinylidene halides (such as vinylidene chloride), vinyl pyridine, vinyl esters (such as vinyl acetate), styrenic compounds (such as styrene, halogenated styrene or α-methyl styrene), dienes (such as butadiene, isoprene or chloroprene) and mixtures thereof. Preferably, the ethylenically unsaturated monomer comprises acrylonitrile, methacrylonitrile and/or methyl methacrylate, more preferably acrylonitrile and/or methacrylonitrile.

The thermoplastic polymer shell may also be a copolymer of the at least one ethylenically unsaturated monomer as described above and a crosslinking multifunctional monomer, the latter being for example selected from divinyl benzene, ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, triallylformal tri(meth)acrylate, allyl methacrylate, trimethylol propane tri(meth)acrylate, tributanediol di(meth)acrylate, polyethylene glycol di(meth)acrylate, 3-acryloyloxyglycol monoacrylate, triacryl formal, triallyl isocyanate, triallyl isocyanurate and mixtures thereof.

Advantageously, the thermoplastic polymer shell constitutes from 60 % to 95 % by weight of the total weight of the particles.

Apart from the thermoplastic polymer shell and the propellant, the particles may comprise up to 20 % by weight of other substances with respect to the total weight of the particles, preferably up to 10 % by weight. These other substances may be silica, chalk, bentonite, methyl cellulose, gum guar, hydroxypropyl methylcellulose, carboxy methylcellulose, colloidal clay and/or salt(s), oxide(s) or hydroxide(s) of metals such as aluminum, calcium, magnesium, barium, iron, zinc, nickel and manganese (for example calcium phosphate, calcium carbonate, magnesium hydroxide, barium sulphate, calcium oxalate, hydroxides of aluminum, iron, zinc, nickel or manganese).

Advantageously, the unexpanded heat-expandable organic particles start to expand at a temperature of at least 90°C, preferably at a temperature between 90°C and 220°C, more preferably between 90°C and 180°C, even more preferably between 90°C and 150°C. The temperature at which said particles start to expand depends on the composition of the shell and propellant.

The average particle size Dv50 of the unexpanded heat-expandable organic particles may vary from 1 µm to 200 µm, preferably from 3 µm to 100 µm, more preferably from 5 µm to 50 µm. This average particle size Dv50 corresponds to the maximum size of 50% of the smallest particles by volume and may be measured by laser diffraction, for example Low Angle Laser Light Scattering.

Advantageously, the amount of unexpanded heat-expandable organic particles in the composition according to the invention is of at least 3 % by weight with respect to the total weight of the composition, preferably from 3 % to 18 % by weight, more preferably from 5 % to 15 % by weight, for example from 6 % to 12 % by weight.

### Inorganic filler

The composition according to the invention comprises at least 20 % by weight of an inorganic filler, with respect to the total weight of the composition.

For example, the inorganic filler may be any inorganic filler generally used in the field of sealants. These fillers are in the form of particles of various geometry. They can be for example spherical, fibrous or have an irregular shape.

Advantageously, the inorganic filler is selected from clays, quartz, hollow mineral microspheres, carbonated fillers and mixtures thereof, preferably from carbonated fillers.

The clay may be selected from talc, montmorillonite, kaolinite, vermiculite and mixtures thereof, in particular talc.

The mineral hollow microspheres may be hollow glass microspheres, in particular made of sodium and calcium borosilicate or aluminosilicate.

Advantageously, the carbonated filler is selected from alkali or alkaline earth metal carbonates and mixtures thereof. Preferably, the carbonated filler comprises calcium carbonate, more preferably the carbonated filler is ground calcium carbonate (GCC) or precipitated calcium carbonate (PCC), optionally coated with fatty acids (in particular fatty acid calcium salt), even more preferably the carbonated filler is precipitated calcium carbonate coated with fatty acids (in particular fatty acid calcium salt).

When calcium carbonate is coated with fatty acids, this imparts total or partial hydrophobicity to the calcium carbonate particles. Furthermore, the fatty acid coating acts as a hydrophobic coating that can help prevent the calcium carbonate from absorbing the constituents of the composition and rendering them ineffective. The hydrophobic coating of calcium carbonate can represent from 0.1 % to 3.5 % by weight, with respect to the total weight of calcium carbonate.

Preferably, the fatty acids coating the calcium carbonate comprise or consist of more than 50 % by weight of stearic acid with respect to the total weight of the fatty acids.

The average particle size of the inorganic filler may vary between 10 nm and 400 µm, preferably between 20 nm and 100 µm, more preferably between 30 nm and 1 µm, even more preferably between 40 nm and 300 nm.

The average particle size advantageously corresponds to the particle size Dv50, i.e. the maximum size of 50 % of the smallest particles by volume, and can be measured by laser diffraction on a MALVERN type device (for example according to ISO 13320).

Unless otherwise stated, standards mentioned throughout the present application are those in effect on the date the application is filed.

The inorganic filler content in the composition according to the invention is advantageously between 20 % and 70 % by weight with respect to the total weight of the composition, preferably between 30 % and 60 % by weight, more preferably between 35 % and 50 % by weight.

### Crosslinking catalyst

The composition according to the invention may further comprise a crosslinking catalyst.

The crosslinking catalyst may be any catalyst known by the skilled person for the condensation of silanol or for the crosslinking of polyurethane.

As crosslinking catalysts for the condensation of silanol, the following examples may be cited:
- organic derivatives of titanium such as titanium acetyl acetonate, titanium tetrapropoxide, titanium tetrabutoxide;
- organic derivatives of zirconium such as zirconium acetyl acetonate, zirconium tetrapropoxide, zirconium tetrabutoxide;
- aluminum such as aluminum chelate (for example K-KAT^{®} 5218 by KING INDUSTRIES);
- amines such as 1,8-diazabicyclo[5.4.0]undec-7-ene (DBU), 1,5-diazabicyclo[4.3.0]non-5-ene (DBN), diethyl ether-2 ,2'-morpholine (DMDEE), 1,4-diazabicyclo[2.2.2]octane (DABCO), 1,5,7-triazabicyclo[4.4.0]dec-5-ene (TBD);
- catalysts based on zinc carboxylate (for example K-KAT^{®} 670 by KING INDUSTRIES);
- tin-based catalysts such as compounds derived from dioctyltin or dibutyltin, in particular dioctyl tin oxide, dioctyl tin diacetate, dioctyl tin dilaurate, dioctyl tin dicarboxylate, dibutyl tin diacetyl acetonate (CAS: 22673-19-4), dibutyl tin dilaurate (DBTDL), dibutyl tin diacetate or dibutyl tin oxide, preferably dibutyl tin diacetyl acetonate;
- guanidine derivatives such as 1-(o-tolyl)biguanide (CAS: 93-69-6), for example RHENOCURE 1000 C (by RheinChemie Additives).

As crosslinking catalysts for the crosslinking of polyurethane, the following examples may be cited:
- bismuth and/or zinc carboxylates, in particular neodecanoate;
- amines such as DABCO or DMDEE;
- organic derivatives of titanium such as titanium acetyl acetonate, titanium tetrapropoxide, titanium tetrabutoxide;
- organic derivatives of zirconium such as zirconium acetyl acetonate, zirconium tetrapropoxide, zirconium tetrabutoxide;
- tin-based catalysts such as compounds derived from dioctyltin or dibutyltin (in particular dibutyltin or dioctyltin dilaurate).

Preferably, the crosslinking catalyst is a tin-based catalyst, preferably selected from compounds derived from dioctyltin and dibutyltin, in particular from dioctyltin and dibutyltin catalysts as described above.

The crosslinking catalyst content in the composition according to the invention is advantageously between 0.01 % and 5 % by weight with respect to the total weight of the composition, preferably between 0.05 % and 2 % by weight, more preferably between 0.1 % and 1 % by weight.

### Adhesion promoter

The composition according to the invention may further comprise an adhesion promoter.

The adhesion promoter may be selected from amino-, mercapto- and epoxyalkoxysilanes, and mixtures thereof. Preferably, the adhesion promoter is selected from aminoalkoxysilanes, more preferably from aminotrialkoxysilanes, even more preferably from aminotrimethoxysilanes, for example (3-aminopropyl)trimethoxysilane.

As an example of an epoxy-alkoxysilane, mention may be made of (3-glycidyloxypropyl)trimethoxysilane (also called GLYMO).

Advantageously, the aminotrimethoxysilanes are formed by the group consisting of 4-amino-3,3-dimethylbutyltrimethoxysilane, (3-aminopropyl)trimethoxysilane and N-(3-(trimethoxysilyl)propyl)ethylenediamine. Preferably, the aminotrimethoxysilane is (3-aminopropyl)trimethoxysilane.

The adhesion promoter content may be between 0.1% and 5% by weight with respect to the total weight of the composition according to the invention, preferably between 0.5 % and 3 % by weight.

### Other additives

The composition according to the invention may further comprise one or more additives selected from moisture scavengers, pigments, plasticizers, solvents, rheology agents, UV stabilizers (or antioxidants) and mixtures thereof.

Advantageously, the composition according to the invention comprises a mixture of additives chosen from moisture scavengers, pigments and UV stabilizers (or antioxidants).

The total content of additives in the composition according to the invention may vary from 0.5 % to 20 % by weight with respect to the total weight of the composition, preferably from 2 % to 15 % by weight, more preferably from 3 % to 10 % by weight.

Advantageously, the composition according to the invention comprises a moisture scavenger.

Suitable moisture scavengers (or desiccants) are in particular alkoxysilanes such as trialkoxysilanes (particularly trimethoxysilanes). Moisture scavengers advantageously prolong the shelf life of the composition according to the invention during storage and transport, before its use.

Advantageously, the moisture scavenger is selected from vinyltrimethoxysilane, trimethoxymethylsilane, propyltrimethoxysilane, vinyltriethoxysilane, alkoxyarylsilanes (for example GENIOSIL^{®} XL 70 sold by WACKER) and mixtures thereof.

Preferably, the moisture scavenger is selected from vinyltrimethoxysilane, vinyltriethoxysilane and their mixture, more preferably vinyltrimethoxysilane.

The moisture scavenger content may be between 0.1 % and 5 % by weight with respect to the total weight of the composition according to the invention, preferably between 0.5 % and 3 % by weight.

Advantageously, the composition according to the invention comprises a pigment.

The pigment may be an organic or inorganic pigment, for example titanium dioxide (such as Kronos^{™} 2066 by Kronos), carbon black (such as PRINTEX^{®} 25 by Orion) or manganese ferrite (such as BAYFERROX^{®} 303 T by LANXESS), preferably titanium dioxide.

The pigment content may be up to 5 % by weight with respect to the total weight of the composition according to the invention, preferably up to 3 % by weight.

The composition according to the invention may comprise a plasticizer.

The plasticizer may be any plasticizer generally used in the field of sealants.

Advantageously, the plasticizer is selected from:
- diisodecyl phthalate (for example PALATINOL^{®} DIDP marketed by BASF),
- diisononyl phthalate (DINP) (for example PALATINOL^{®} N marketed by BASF),
- an ester of alkylsulphonic acid and phenol (for example MESAMOLL^{®} marketed by LANXESS),
- the diisononyl ester of 1,2-cyclohexanedicarboxylic acid (for example HEXAMOLL DINCH^{®} marketed by BASF),
- pentaerythritol tetravalerate (for example PEVALENTM marketed by PERSTORP), and
- mixtures thereof.

The plasticizer content may be up to 15 % by weight with respect to the total weight of the composition according to the invention, preferably up to 10 % by weight.

The composition according to the invention may comprise from 0 % to 5 % by weight of a solvent with respect to the total weight of the composition according to the invention. Preferably, the solvent is volatile at room temperature (temperature of about 23°C). For example, the volatile solvent may be selected from alcohols that are volatile at room temperature, such as ethanol or isopropanol. The volatile nature of the solvent allows the joint, obtained after curing the composition, to no longer contain any solvent.

By "about X", it is intended more or less 10 % the value of X.

The composition according to the invention may comprise a rheology agent.

The rheology agent can be any rheology agent usually used in the field of adhesive and/or sealant compositions.

Advantageously, the rheology agent is selected from:
- PVC plastisols, corresponding to a suspension of PVC in a plasticizer miscible with PVC, obtained in situ by heating at temperatures ranging from 60°C to 80°C. These plastisols can be those described in particular in "Polyurethane Sealants", Robert M. Evans, ISBN 087762-998-6,
- fumed silica, such as HDK^{®} N20 by WACKER,
- urea derivatives resulting from the reaction of an aromatic diisocyanate monomer such as 4,4'-MDI with an aliphatic amine such as butylamine,
- amide waxes, preferably micronized, such as CRAYVALLAC^{®} SLX, CRAYVALLAC^{®} SLW or CRAYVALLAC^{®} SUPER by Arkema, or THIXATROL^{®} AS8053 or THIXATROL^{®} MAX (EC No: 432-430 -3) which are available from ELEMENTIS, or even RHEOBYK 7503 by BYK, and
- mixtures thereof.

By "amide waxes", it is intended waxes comprising one or more compounds having at least one amide group. In particular, amide waxes can be obtained from fatty acid(s) (for example ricinoleic acid) and (di)amine(s).

By "micronized", it is intended an average particle size of less than 1 mm, advantageously less than 500 µm, preferably less than 100 µm, more preferably less than 10 µm.

The average particle size advantageously corresponds to the particle size Dv50, i.e. the maximum size of 50% of the smallest particles by volume, and may be measured with a particle sizer, in particular by laser diffraction on a MALVERN type device. (for example according to standard ISO 13320).

The content of rheology agent may be up to 15 % by weight with respect to the total weight of the composition according to the invention, preferably up to 10 % by weight.

Advantageously, the composition according to the invention comprises a UV stabilizer (or antioxidant). UV stabilizers are typically introduced to protect the composition from degradation resulting from reaction with oxygen which is likely to be formed by the action of heat or light. These compounds may include antioxidants capable of scavenging free radicals.

Advantageously, the UV stabilizer (or antioxidant) is selected from benzotriazoles, benzophenones, hindered phenols such as octadecyl 3-(3,5-di-tert-butyl-4-hydroxyphenyl)propionate (CAS: 2082-79-3), pentaerythritol tetrakis[3-(3,5-di-tert-butyl-4-hydroxyphenyl)propionate] (CAS: 6683-19-8) or ethylene bis(oxyethylene) bis-(3-(5-tert-butyl-4-hydroxy-m-tolyl)propionate) (CAS: 36443-68-2), hindered amines (also named HALS for "hindered amine light stabilizers") such as bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS: 41556-26-7), methyl 1,2,2,6,6-pentamethyl-4-piperidyl sebacate (CAS: 82919-37-7) or 4,4'-bis(α,α-dimethylbenzyl)diphenylamine, and mixtures thereof.

Preferably, the UV stabilizer (or antioxidant) is selected from hindered phenols, hindered amines and mixtures thereof, more preferably from hindered phenols.

Hindered phenols are generally phenols substituted with at least one bulky group (such as tert-butyl) preferably in the ortho position with respect to the hydroxy group.

The UV stabilizer (or antioxidant) content may be between 0.1 % and 5 % by weight with respect to the total weight of the composition according to the invention, preferably between 0.5 % and 3 % by weight.

### Other features of the composition according to the invention

The composition according to the invention may be a one-component composition or a two-component composition, preferably a one-component composition.

According to a preferred embodiment, the composition according to the invention is a one-component composition comprising:
- 10% to 60 % by weight of a moisture-crosslinkable polymer, preferably a silylated polymer,
- at least 3 % by weight of unexpanded heat-expandable organic particles,
- 20 % to 70 % by weight of an inorganic filler,
- 0.01 % to 5 % by weight of a crosslinking catalyst,
- 0.1 % to 5 % by weight of an adhesion promoter, and
- optionally 0.5 % to 20 % by weight of one or more additives selected from moisture scavengers, pigments, plasticizers, solvents, rheology agents, UV stabilizers (or antioxidants) and mixtures thereof,
the weight percentages being with respect to the total weight of the composition.

Preferably, the one-component composition according to the invention consists essentially of the ingredients mentioned above. By "consisting essentially", it is intended that the composition comprises less than 5 % by weight of ingredients other than the aforementioned ingredients, relative to the total weight of the composition, preferably less than 2% by weight, even more preferably less than 1% by weight.

The ingredients of this embodiment and their particular contents are as described above, including the embodiments and preferred features.

In particular, the composition according to the invention is a one-component composition comprising:
- 30 % to 50 % by weight of a moisture-crosslinkable polymer, preferably a silylated polymer of formula (II") or (III'),
- 5% to 15% by weight of unexpanded heat-expandable organic particles, the unexpanded heat-expandable organic particles preferably comprising a thermoplastic polymer shell being a polymer of at least one ethylenically unsaturated monomer, and a propellant comprising hydrocarbons,
- 35 % to 50 % by weight of an inorganic filler, the inorganic filler being preferably ground calcium carbonate or precipitated calcium carbonate, optionally coated with fatty acids,
- 0.1 % to 1 % by weight of a crosslinking catalyst, the crosslinking catalyst being preferably a tin-based catalyst,
- 0.5 % to 3 % by weight of an adhesion promoter, the adhesion promoter being preferably selected from aminotrimethoxysilanes, and
- optionally 3 % to 10 % by weight of one or more additives selected from moisture scavengers, pigments, plasticizers, solvents, rheology agents, UV stabilizers (or antioxidants) and mixtures thereof,
the weight percentages being with respect to the total weight of the composition.

Preferably, the one-component composition according to the invention consists essentially of the ingredients mentioned above.

The ingredients of this embodiment and their particular contents are as described above, including the embodiments and preferred features.

According to another embodiment, the composition according to the invention is a two-component composition comprising a component A and a component B, wherein the composition comprises:
- 10 % to 60 % by weight of a moisture-crosslinkable polymer in the component A and/or B, preferably in the component A, provided that the moisture-crosslinkable polymer is in the component A if is a polyurethane having -NCO end groups, the moisture-crosslinkable polymer being preferably a silylated polymer,
- at least 3 % by weight of unexpanded heat-expandable organic particles in the component A and/or B, preferably in the component B,
- 20 % to 70 % by weight of an inorganic filler in the component A and/or B, preferably in the component B,
- 0.01 % to 5 % by weight of a crosslinking catalyst in the component A,
- 0.1 % to 5 % by weight of an adhesion promoter in the component A and/or B, preferably in the component A,
- 0.0015 % to 0.55 % by weight of water in the component B, and
- optionally 0.5 % to 20 % by weight of one or more additives selected from moisture scavengers, pigments, plasticizers, solvents, rheology agents, UV stabilizers (or antioxidants) and mixtures thereof, the additive(s) being in the component A and/or B, preferably in the component A,
   the weight percentages being with respect to the total weight of the composition, and
   the weight ratio of the component A with respect to the component B being preferably between 10 and 30.

Preferably, the two-component composition according to the invention consists essentially of the ingredients mentioned above.

The ingredients of this embodiment and their particular contents are as described above, including the embodiments and preferred features.

In particular, the composition according to the invention is a two-component composition comprising a component A and a component B, wherein the composition comprises:
- 30 % to 50 % by weight of a moisture-crosslinkable polymer in the component A and/or B, preferably in the component A, provided that the moisture-crosslinkable polymer is in the component A if is a polyurethane having -NCO end groups, the moisture-crosslinkable polymer being preferably a silylated polymer of formula (II") or (III'),
- 5 % to 15 % by weight of unexpanded heat-expandable organic particles in the component A and/or B, preferably in the component B, the unexpanded heat-expandable organic particles preferably comprising a thermoplastic polymer shell being a polymer of at least one ethylenically unsaturated monomer, and a propellant comprising hydrocarbons,
- 35 % to 50 % by weight of an inorganic filler in the component A and/or B, preferably in the component B, the inorganic filler being preferably ground calcium carbonate or precipitated calcium carbonate, optionally coated with fatty acids,
- 0.1 % to 1 % by weight of a crosslinking catalyst in the component A, the crosslinking catalyst being preferably a tin-based catalyst,
- 0.5 % to 3 % by weight of an adhesion promoter in the component A and/or B, preferably in the component A, the adhesion promoter being preferably selected from aminotrimethoxysilanes,
- 0.03 % to 0.3 % by weight of water in the component B, and
- optionally 3 % to 10% by weight of one or more additives selected from moisture scavengers, pigments, plasticizers, solvents, rheology agents, UV stabilizers (or antioxidants) and mixtures thereof, the additive(s) being in the component A and/or B, preferably in the component A,
   the weight percentages being with respect to the total weight of the composition, and
   the weight ratio of the component A with respect to the component B being preferably between 10 and 30.

Preferably, the two-component composition according to the invention consists essentially of the ingredients mentioned above.

The ingredients of this embodiment and their particular contents are as described above, including the embodiments and preferred features.

Advantageously, the composition according to the invention has a shear strength comprised between 1 MPa and 5 MPa, preferably between 1.0 MPa and 3 MPa.

The shear strength of the composition according to the invention is advantageously measured after curing said composition for 14 days in standard conditions (e.g. 23°C +/- 2°C, 50 %RH +/- 5 %RH). The skilled person knows how to measure shear strength. In particular, shear strength may be measured as described in Example 1 hereinafter.

The composition according to the invention can be prepared by simple mixing of its ingredients. An example of preparation of the composition according to the invention is described in Example 1.

The composition according to the invention is preferably stored in an anhydrous environment, for example in hermetic packaging, where said composition is protected from humidity and preferably protected from light.

### Method for bonding substrates

The invention also relates to a method for bonding substrates comprising the steps of:
- coating, on at least one surface of the substrates, of the composition according to the invention as described above (including the embodiments and preferred features), then
- contacting the substrates.

It is understood that, during the coating step and the contacting step, the composition according to the invention is in an uncured state.

The substrates may be identical or different.

Preferably, two substrates are bonded together.

The substrates to be implemented are vary varied, and are advantageously made of plastic, metal and/or composite materials. Preferably, at least one of the substrates is made of a metal material, more preferably the substrates are made of a metal material.

The plastic material may be a polyolefin, such as polyethylene or polypropylene, or a polyester.

The metal material may be pure or an alloy and is advantageously aluminum or steel, preferably aluminum.

The composite material may be a reinforced plastic material, such as fiber-reinforced plastic, in particular sheet moulding composite (SMC). The fibers in the fiber-reinforced plastic may be glass, carbon, aramid or basalt fibers, preferably glass fibers. The fiber length may vary between 6 mm and 50 mm. The polymer in the reinforced plastic material may be polyester, polyolefin, epoxy or vinyl ester resin, preferably polyester or polyolefin (such as polyethylene or polypropylene). The polymer in the reinforced plastic material is preferably unsaturated. The reinforced plastic material may comprise other compounds than the fibers and the polymer (such as filler and/or catalyst). Preferably, the reinforced plastic material is SMC, in particular glass fiber-reinforced unsaturated polyester.

According to a preferred embodiment, the substrates to be bonded are a battery lid and a battery container, in particular for an automobile.

Advantageously, the method for bonding substrates according to the invention does not comprise a step of applying a primer onto one or more of the substrates before the coating step.

Advantageously, the method for bonding substrates according to the invention does not comprise a surface treatment of one or more of the substrates before the coating step.

By "contacting the substrates", it is intended that the substrates are contacted *via* the composition according to the invention, which is sandwiched between them.

Once the substrates are contacted, the total thickness of the composition according to the invention between the substrates may be between 1 mm and 15 mm, preferably between 2 mm and 10 mm.

Advantageously, the method for bonding substrates according to the invention further comprises a step of embedding a heating element in the composition according to the invention. Preferably, this step is carried out before and/or simultaneously to the step of contacting the substrates. Therefore, the composition is in an uncured state during the embedding step.

This step may be carried out by:
- placing the heating element onto a first thickness of the composition according to the invention, said composition coating at least one surface of a first substrate, then
- contacting the heating element with a second thickness of the composition according to the invention.

The step of contacting the heating element with a second thickness of the composition may be carried out by directly coating said composition onto the heating element or by contacting a second substrate having at least one surface coated with a second thickness of said composition.

Therefore, according to an embodiment, the method for bonding substrates according to the invention comprises the steps of:
- coating on at least one surface of a first substrate of a first thickness of the composition according to the invention, then
- placing a heating element onto the first thickness of said composition, then
- contacting the heating element with a second thickness of the composition according to the invention, and
- contacting the substrates.

Advantageously, the thickness of the heating element is at least four times less the thickness of the composition according to the invention between the substrates, preferably at least eight times less, more preferably at least ten times less. The thickness of the heating element may be less than 0.7 mm, preferably less than 0.5 mm, more preferably less than 0.3 mm.

The length and width of the heating element may be adjusted to be adapted to those of the composition according to the invention, i.e. to be suitable to provide sufficient heat throughout the composition. Preferably, the heating element is totally coated by the composition according to the invention.

Preferably, the heating element is an electric heating element, i.e. provides heat when an electric current is applied.

The heating element may be one or more electric heating wires, one or more electric heating ribbons and/or one or more electric heating strips, for example electric heating wires interwoven together.

The heating element may be connected to a connector, said connector being able to be further connected to a heating power controller. A heating power controller is a device that can adjust the heating temperature of the heating element. For example, when the heating element is an electric heating element, the heating power controller may have a tune switch to adjust the heating temperature by tuning magnitude of current. The heating power controller may also have a tune switch to set the heating time.

Therefore, the connector makes it possible to easily connect and disconnect the heating element from the heating power controller when needed.

Optionally, after contacting the substrates, it is possible to further fasten the substrates by fastening means such as bolts and/or rivets. Preferably, this step is carried out when the composition according to the invention is not fully cured.

When said fastening means and a heating element are implemented, the heating element advantageously comprises holes for passing the fastening means through said heating element.

After contacting the substrates, the composition according to the invention is advantageously cured. Preferably, curing is carried out between 15°C and 50°C, more preferably between 18°C and 30°C, and at a relative humidity between 30 % and 80 %, more preferably between 40 % and 70 %. The curing time depends on the type and thickness of the composition (e.g. one-component compositions cure more slowly than two-component compositions), the temperature and relative humidity.

### Article

The invention further relates to an article comprising the (cured or uncured) composition according to the invention as described above (including the embodiments and preferred features), said composition bonding at least two substrates of said article.

The article may be obtained thanks to the method for bonding substrates according to the invention.

The substrates are preferably as described above for the method for bonding substrates according to the invention (including the embodiments and preferred features), in particular the substrates are made of a metal material.

According to a preferred embodiment, the article is a battery housing comprising a lid and a container (in particular for an automobile), the composition according to the invention bonding the lid and the container.

The total thickness of the composition according to the invention between the substrates may be between 1 mm and 15 mm, preferably between 2 mm and 10 mm.

Advantageously, the article further comprises a heating element embedded in the composition according to the invention. Once the composition according to the invention is cured, the heating element makes it possible to easily heat said composition, making the heat-expandable organic particles to expand and the composition to crack, and thus, to easily separate the substrates and to easily disassemble the article.

The features of the heating element are as described above (including the embodiments and preferred features) for the method for bonding substrates according to the invention (in particular, thickness, width, length, structure, etc.).

The heating element may be connected to a connector, said connector being able to be further connected to a heating power controller, as described above for the method for bonding substrates according to the invention (including the embodiments and preferred features).

Optionally, the article according to the invention may comprise fastening means such as bolts and/or rivets. The fastening means are used to further fasten the substrates bonded by the composition according to the invention.

When said fastening means and a heating element are implemented, the heating element advantageously comprises holes for passing the fastening means through said heating element.

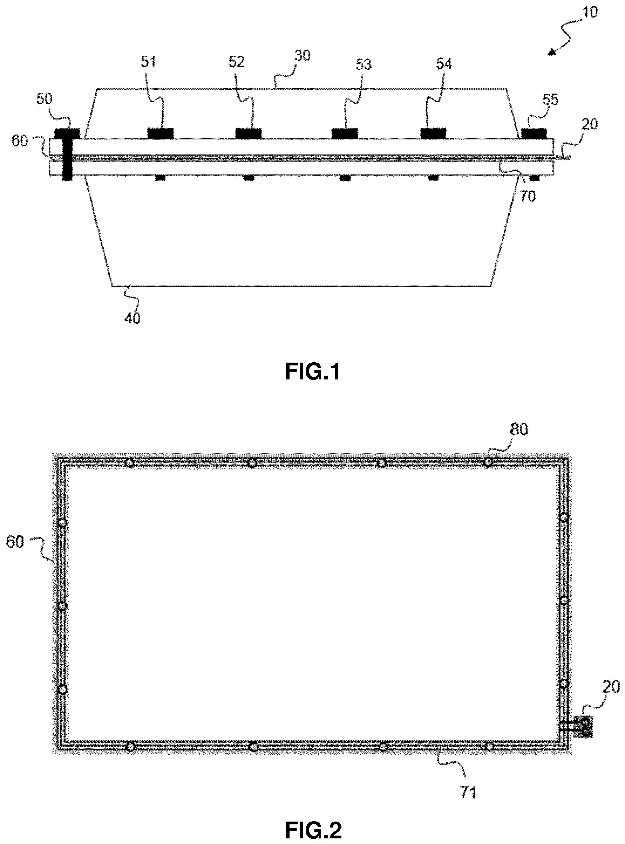

An example of an article being a battery housing comprising the composition according to the invention, and further comprising a heating element and bolts, is represented in Figure 1.

An embodiment of embedded heating wires having holes is represented in Figure 2.

### Method for separating substrates

The invention relates to a method for separating substrates comprising a heating step.

### First embodiment

According to a first embodiment, the method for separating substrates comprises a heating step of the article according to the invention.

The article according to the invention is as described above, including the embodiments and preferred features.

Preferably, the heating step is carried out at the area where the composition according to the invention is located. This makes it possible to limit the heating area, which is advantageous for articles such as battery housings since the component inside the housings would not suffer from heat.

This can be easily achieved when the article comprises a heating element embedded in the composition according to the invention. Other means such as a heat gun may be used to heat the composition, but the embedded heating element is preferred.

Therefore, the article preferably comprises a heating element embedded in the composition according to the invention.

When the article comprises fastening means (such as bolts and/or rivets), the heating step may be carried out before or after dismantling them, generally after dismantling them.

The heating step is advantageously carried out at a temperature and for a period of time sufficient to cause the composition according to the invention to crack.

The heating step may be carried out at a temperature of at least 120°C, preferably between 120°C and 250°C, more preferably between 150°C and 220°C.

The heating step may be carried out for 30 min or less, preferably for 20 min or less, more preferably for a period of time ranging from 5 min to 20 min.

After the heating step, the substrates of the article (which were bonded *via* the composition according to the invention) can be easily separated, in particular manually.

### Second embodiment

According to a second embodiment, the method for separating substrates comprises the steps of the method for bonding substrates according to the invention as described above (including the embodiments and preferred features), followed by a heating step. In particular, the method for bonding substrates advantageously comprises a step of embedding a heating element in the composition, as described above (including the embodiments and preferred features).

The heating step is as described above for the first embodiment, including the embodiments and preferred features. In particular, the heating step is preferably carried out at the area where the composition according to the invention is located.

When the method for bonding substrates comprises a fastening step of the substrates by fastening means (such as bolts and/or rivets), the heating step may be carried out before or after dismantling them, generally after dismantling them.

As for the first embodiment, the substrates (which were bonded *via* the composition according to the invention) can be easily separated after the heating step, in particular manually.

In particular, the method for separating substrates according to this second embodiment comprises the steps of:
- coating, on at least one surface of the substrates, of the composition according to the invention as described above (including the embodiments and preferred features), then
- contacting the substrates, then
- curing the composition, then
- heating the composition,
said method preferably comprising a step of embedding a heating element in the composition according to the invention before and/or simultaneously to the step of contacting the substrates.

Preferably, the method for separating substrates according to this second embodiment comprises the steps of:
- coating on at least one surface of a first substrate of a first thickness of the composition according to the invention as described above (including the embodiments and preferred features), then
- placing a heating element onto the first thickness of said composition, then
- contacting the heating element with a second thickness of the composition according to the invention,
- contacting the substrates, then
- curing the composition, then
- heating the composition.

### Use of the composition according to the invention

The invention further relates to the use of the composition according to the invention as an adhesive or a sealant, preferably as a sealant.

Preferably, the composition according to the invention is used for sealing substrates as described above (including the embodiments and preferred features) in the method for bonding substrates according to the invention.

According to a preferred embodiment, the composition according to the invention is used for sealing the lid and container of a battery housing, in particular for an automobile.

Furthermore, the invention relates to the use of the composition according to the invention to manufacture an article comprising heat-separable substrates.

Preferably, the article comprising heat-separable substrates is the article according to the invention as described above, including the embodiments and preferred features.

All the embodiments described above can be combined with each other. In particular, the various aforementioned ingredients in the composition, and in particular the preferred embodiments, can be combined with each other.

### Description of the figures

Figure 1 represents an embodiment, without being limited to thereto, of an article being a battery housing (10) comprising a lid (30) and a container (40), the composition according to the invention (60) bonding the lid (30) and the container (40). The battery housing (10) also comprises bolts (50, 51, 52, 53, 54, 55) and a heating element (70) embedded in the composition (60), said heating element (70) being connected to a connector (20). The leftmost bolt (50) is depicted to show its full shape, but it passes through the edges of the lid (30) and container (40), the composition (60) and the heating element (70), like the other bolts (51, 52, 53, 54, 55). When the heating element (70) is totally coated by the composition (60), it is not visible from the outside.
Figure 2 represents a top view of an embodiment, without being limited to thereto, of heating wires (71) embedded in the composition according to the invention (60). The heating wires (71) have holes (80) for passing fastening means, and are connected to a connector (20). When the heating wires (71) are totally coated by the composition (60), they are not visible from the outside.

The following examples illustrate the invention without limiting it.

### EXAMPLES

### Example 1: Materials and methods

### Materials

The following materials were implemented:
- MS POLYMER^{™} S203H commercialized by KANEKA: polypropyleneoxide terminated with dimethoxysilyl groups having a viscosity at 23°C of 6-10 Pa.s (Brookfield), moisture-crosslinkable polymer;
- MS POLYMER^{™} SAX400 commercialized by KANEKA: polyether terminated with methyldimethoxysilyl groups having a viscosity at 23°C of 19.5-28.5 Pa.s (Brookfield), moisture-crosslinkable polymer;
- Expancel^{®} 043DU80 commercialized by Nouryon: microspheres having a thermoplastic shell and a core comprising a blowing agent, and having an average particle size Dv50 of 16-24 µm (measured by laser diffraction, Low Angle Laser Light Scattering), unexpanded heat-expandable organic particles;
- DYNASYLAN^{®} VTMO commercialized by EVONIK: vinyltrimethoxysilane (CAS: 2768-02-7), moisture scavenger;
- DYNASYLAN^{®} AMMO commercialized by EVONIK: (3-aminopropyl)trimethoxysilane (CAS: 13822-56-5), adhesion promoter;
- Kronos^{™} 2066 commercialized by Kronos: titanium dioxide, pigment;
- CALOFORT^{®} SV commercialized by Specialty Minerals: precipitated calcium carbonate coated with calcium stearate, having an average particle size of 0.07 µm, inorganic filler;
- Irganox^{®} 245 commercialized by BASF: ethylene bis(oxyethylene) bis-(3-(5-tert-butyl-4-hydroxy-m-tolyl)propionate) (CAS: 36443-68-2), antioxidant;
- TIB KAT^{®} 226 commercialized by TIB Chemicals: dibutyltin bis(2,4-pentanedionate) (CAS: 22673-19-4), catalyst.

### Preparation of compositions A-E

Compositions A-E were prepared by mixing (speedmixer DAV 400) the ingredients pointed out in Table 1 at room temperature, e.g. 18°C-25°C (the temperature in the mixture may increase during its preparation due to friction shear), and at atmospheric pressure. MS POLYMER^{™}, Expancel^{®} (when present), VTMO, Irganox^{®} 245 and Kronos^{™} 2066 were charged into mixing cup and firstly mixed (e.g. for about 2 min under about 2000 rpm (revolutions per minute)). Then CALOFORT^{®} SV (when present) was loaded and mixed (e.g. for about 3 min under about 2000 rpm). AMMO and TIB KAT 226 were then added into cup and mixed under vacuum (e.g. for about 2min under about 2000 rpm, pressure of about 20 kPa). After their preparation, the compositions were stored into sealed cartridges, until their properties are evaluated.

### Shear strength

Shear strength was measured on standard anodized aluminum 6061 substrates. A shear strength specimen was prepared by bonding two anodized aluminum panels (100mm*25mm*2mm), overlapping 12.5mm*25mm*2mm glue dimension (with the composition to be tested). The shear specimen was placed in standard conditions (23°C +/- 2°C, 50 %RH +/- 5 %RH (RH for relative humidity)) for 14 days, and then pulled on an Instron machine by 50mm/min. Shear strength was then calculated by dividing the pulling force necessary to break the specimen by square of 12.5mm*25mm.

### Properties after heating

A thickness of about 2 mm of the composition to be tested was applied onto a first aluminum piece, then electric heating wires interwoven together (thickness of less than 0.3 mm) were placed onto the uncured composition and covered by a thickness of about 2 mm of the composition. A second aluminum piece was then pressed down onto the uncured composition. Therefore, the heating wires were embedded in the uncured composition (total thickness of about 4 mm), the latter being sandwiched between two aluminum pieces (the aluminum pieces being anodized aluminum 6061).

The composition was cured for two weeks under standard conditions (23°C +/-2°C, 50 %RH +/- 5 %RH). A heating power controller (having a tune switch to adjust the heating temperature by tuning magnitude of current, and a tune switch to set the heating time) was then connected to the heating wires and the temperature was raised at 200°C for 10min-15min, and then stopped.

The structure of the composition was visually evaluated and it was tested if the two aluminum pieces could be manually separated easily.

### Example 2: Compositions according to the invention and comparative composition

Compositions A-E were prepared as described in Example 1 ("Preparation of compositions A-E") with the ingredients indicated in Table 1, the percentages being weight percentages with respect to the total weight of the composition.

**Table 1: Ingredients of compositions A-E**

| **Ingredients** | **A (inv.)** | **B (inv.)** | **C (inv.)** | **D (comp.)** | **E (comp.)** |
|---|---|---|---|---|---|
| MS POLYMER^{™} 203 H | 41.7% | - | - | - | - |
| MS POLYMER^{™} SAX400 | - | 41.7% | 41.7% | 47.7% | 87.7% |
| Expancel^{®} 043DU80 | 6% | 6% | 12% | - | 6% |
| DYNASYLAN^{®} VTMO | 1% | 1% | 1% | 1% | 1% |
| DYNASYLAN^{®} AMMO | 1% | 1% | 1% | 1% | 1% |
| Kronos^{™} 2066 | 2% | 2% | 2% | 2% | 2% |
| CALOFORT^{®} SV | 46% | 46% | 40% | 46% | - |
| Irganox^{®} 245 | 2% | 2% | 2% | 2% | 2% |
| TIB KAT^{®} 226 | 0.3% | 0.3% | 0.3% | 0.3% | 0.3% |

Their properties were then evaluated as described in Example 1 ("Shear strength" and "Properties after heating") and the results are indicated in Table 2.

**Table 2: Properties of compositions A-E**

| **Properties** | **A (inv.)** | **B (inv.)** | **C (inv.)** | **D (comp.)** | **E (comp.)** |
|---|---|---|---|---|---|
| Shear strength before heating | 1.8 MPa | 2.4 MPa | 2.1 MPa | 2.6 MPa | 0.3 MPa |
| Heating to 200°C | 15min | 15min | 10min | 15min | 15 min |
| Structure after heating | Composition expanded and crack in middle, easy to separate the two aluminum pieces | | | Difficult to separate the two aluminum pieces manually | Easy to separate the two aluminum pieces |

The combination of an inorganic filler and heat-expandable organic particles makes it possible to easily separate apart the two aluminum pieces after heating, while maintaining a sufficiently high shear strength before heating (comparison of compositions B and C according to the invention with comparative compositions D and E).

A similar effect is observed for composition A according to the invention, which is based on another moisture-crosslinkable polymer.

Therefore, the compositions according to the invention make it possible to provide an efficient sealing structure (in particular a battery housing case, wherein the composition is applied between the lid and the container), which can be easily disassembled when necessary (for example, for repair or maintenance operations).

## Claims

1. A composition comprising:
- a moisture-crosslinkable polymer,
- at least 1 % by weight of unexpanded heat-expandable organic particles, and
- at least 20 % by weight of an inorganic filler,
the weight percentages being with respect to the total weight of the composition.

2. The composition according to claim 1, wherein the moisture-crosslinkable polymer is selected from polyurethanes having -NCO end groups, silylated polymers and mixtures thereof, preferably from silylated polymers and mixtures thereof.

3. The composition according to claim 1 or 2, wherein the moisture-crosslinkable polymer content varies from 10 % to 60 % by weight with respect to the total weight of the composition, preferably from 20 % to 55 % by weight, more preferably from 30 % to 50 % by weight.

4. The composition according to any one of claims 1 to 3, wherein the unexpanded heat-expandable organic particles comprise a thermoplastic polymer shell and a propellant entrapped therein.

5. The composition according to any one of claims 1 to 4, wherein the inorganic filler is selected from clays, quartz, hollow mineral microspheres, carbonated fillers and mixtures thereof, preferably from carbonated fillers.

6. A method for bonding substrates comprising the steps of:
- coating, on at least one surface of the substrates, of the composition according to any one of claims 1 to 5, then
- contacting the substrates.

7. The method for bonding substrates according to claim 6, wherein the substrates to be bonded are a battery lid and a battery container, in particular for an automobile.

8. The method for bonding substrates according to claim 6 or 7, further comprising a step of embedding a heating element in the composition.

9. An article comprising the composition according to any one of claims 1 to 5, said composition bonding at least two substrates of said article.

10. The article according to claim 9, the article being a battery housing comprising a lid and a container, and the composition bonding the lid and the container.

11. The article according to claim 9 or 10, further comprising a heating element embedded in the composition.

12. A method for separating substrates comprising a heating step of the article according to any one of claims 9 to 11.

13. A method for separating substrates comprising the steps of the method for bonding substrates according to any one of claims 6 to 8, followed by a heating step.

14. Use of the composition according to any one of claims 1 to 5 as an adhesive or a sealant, preferably as a sealant.

15. Use of the composition according to any one of claims 1 to 5 to manufacture an article comprising heat-separable substrates.
